Europäisches Patentamt

European Patent Office

Office européen des brevets

(11) Veröffentlichungsnummer: **0 301 017 B1**

# (12) EUROPÄISCHE PATENTSCHRIFT

(45) Veröffentlichungstag der Patentschrift :
16.10.91 Patentblatt 91/42

(51) Int. Cl.⁵ : **G08C 15/00, H04L 12/28**

(21) Anmeldenummer : 87902389.3

(22) Anmeldetag : 09.04.87

(86) Internationale Anmeldenummer :
PCT/DE87/00163

(87) Internationale Veröffentlichungsnummer :
WO 87/06379 22.10.87 Gazette 87/23

(54) DATENÜBERTRAGUNGSVERFAHREN UND DATENÜBERTRAGUNGSVORRICHTUNG.

(30) Priorität : 09.04.86 DE 3611949

(43) Veröffentlichungstag der Anmeldung :
01.02.89 Patentblatt 89/05

(45) Bekanntmachung des Hinweises auf die
Patenterteilung :
16.10.91 Patentblatt 91/42

(84) Benannte Vertragsstaaten :
AT BE CH DE FR GB IT LI LU NL SE

(56) Entgegenhaltungen :
FR-A- 2 535 133
US-A- 4 047 162
US-A- 4 063 220
Fernseh-und Kino-Technik, 36th Edition, No. 8,
1982, (Berlin,DE), H.G. Stockmann:
"Fernwirksystem mit digitaler dezentraler Datenverarbeitung für Produktion und Sendeabwicklung sowie Schnittsteuerung", pages
309-310.

(73) Patentinhaber : REGULEX GES. F.
TECHNISCHE INFORMATIONSSYSTEME
ZENTRALE LEIT- U. REGELTECHNIK MBH
Candidplatz 9
W-8000 München 90 (DE)

(72) Erfinder : MAYER, Rolf
Griechenstrasse 2
W-8000 München 90 (DE)
Erfinder : SCHWALLER, Edwin
Kirchbergstrasse 68
CH-5024 Küttigen (CH)

(74) Vertreter : Kuhnen, Wacker & Partner
Schneggstrasse 3-5 Postfach 1553
W-8050 Freising (DE)

## Beschreibung

Die Erfindung betrifft ein Datenübertragungsverfahren und eine Datenübertragungsvorrichtung gemäß den Oberbegriffen der Ansprüche 1 bzw. 6.

Aus der DE-OS 24 12 959 und der DE-OS 26 39 996 sind jeweils Anordnungen zum Schalten mehrerer Verbraucher von einer zentralen Stelle aus bekannt. Dabei sind über eine gemeinsame elektrische Leitung eine Mehrzahl von zu betätigenden Verbrauchern und eine Mehrzahl von elektrischen Schaltvorrichtungen verbunden, mittels der die Verbraucher betätigbar sind. Ein zentraler Taktgeber in Form eines Oszillators definiert jeweils Zeitfenster, in denen die Übertragungsleitung einem bestimmten Paar aus Schaltvorrichtung und Verbraucher zur Verfügung steht. Damit ist es möglich, durch Betätigung einer bestimmten Schaltvorrichtung den zugeordneten an einem entfernten Ort angeordneten Verbraucher zu aktivieren.

Aus der DE-OS 27 44 031 ist eine ähnliche Schaltvorrichtung bekannt, bei der jedoch die Leitungszuweisung für die einzelnen Verbraucher durch einen Mikrorechner gesteuert ist. Damit ist es möglich komplexere Daten zwischen Verbraucher und Steuereinheit zu übertragen.

Des weiteren ist aus der US-PS 4 127 845 ein Datenübertragungssystem bekannt bei dem jeweils über Schnittstellenvorrichtungen eine Mehrzahl von Datenübertragungsmodulen, die jeweils eine Steuereinheit aufweisen, an eine gemeinsame Datenübertragungsstrecke angeschlossen sind. Der bidirektionals Datenaustausch zwischen diesen einzelnen Datenübertragungsmodulen wird durch eine zentrale Steuereinheit geregelt. Nachteilig hierbei, wie auch bei allen Datenübertragungseinrichtungen, bei denen die Datenübertragung durch eine zentrale Steuereinheit geregelt wird, ist die Tatsache, daß bei Ausfall dieser zentralen Steuereinheit das gesamte Datenübertragungssystem außer Betrieb gesetzt wird.

Aus der DE-PS 25 43 028 ist zwar ein elektronisches System zur Fernbetätigung von an einer oder an mehreren Stellen angeordneten elektrischen Verbrauchern bekannt, bei dem auf diese zentrale Steuereinheit verzichtet wird, und die Datenübertragung dadurch gesteuert wird, daß ein momentan sendender Schaltgeber ein codiertes Signal abgibt, das die übrigen Schaltgeber sperrt. Hierbei kann es jedoch leicht zu Störungen kommen, da aufgrund von Übertragungsfehlern der falsche elektrische Verbraucher betätigt werden kann.

Schließlich ist aus der FR-A-2 535 133 ein Datenübertragungsverfahren bzw. eine Datenübertragungsvorrichtung gemäß dem Oberbegriff des Anspruchs 1 bzw. des Anspruchs 5 bekannt. Hierbei werden zwischen einer Mehrzahl von an eine gemeinsame Übertragungsstrecke angeschlossenen Datenübertragungsmodulen Daten übertragen. Dazu werden die einzelnen Module abwechselnd entsprechend einer vorbestimmten Sendereihenfolge eine vorbestimmte Sendeperiode lang zum Aussenden bzw. Empfangen von Daten veranlaßt. Die Steuerung des Datenaustausches erfolgt durch die einzelnen Datenübertragungsmodule selbst. Zur Festlegung der Sendereihenfolge wird hierbei eine das sendende Datenübertragungsmodul charakterisierende Kennung mitübertragen. Nachteilig bei dieser bekannten Datenübertragungsvorrichtung bzw. bei diesem bekannten Verfahren zur Datenübertragung ist es, daß zwar alle Daten von den einzelnen Datenübertragungsmodulen empfangen werden, jedoch nur solche Daten dauerhaft in den jeweiligen Datenübertragungsmodul übernommen werden, die in diesem Datenübertragungsmodul tatsächlich benötigt werden.

Aufgabe der vorliegenden Erfindung ist es daher ein Datenübertragungsverfahren der im Oberbegriff des Anspruchs 1 angegebenen Gattung und eine damit arbeitende Datenübertragungsvorrichtung nach Anspruch 5 zu schaffen, die die vorgenannten Nachteile vermeidet und eine höhere Zuverlässigkeit und Sicherheit bei der Datenübertragung gewährleistet.

Die Lösung dieser Aufgabe erfolgt durch die Merkmale des Anspruchs 1 bzw. 5.

Dadurch, daß die übertragenen Daten unabhängig von ihrem Bestimmungsort in allen angeschlossenen Datenübertragungsmodulen empfangen und abgespeichert werden, ergibt sich eine erhöhte Sicherheit und Zuverlässigkeit der Datenübertragung, da keine Möglichkeit der Fehlleitung bestimmter Daten besteht. Damit werden auch komplizierte Prüfmechanismen bzw. Prüfverfahren überflüssig mit denen bei bekannten Datenübertragungsverfahren festgestellt wird ob die übertragenen Daten tatsächlich ihren Zielort erreicht haben. Damit ist wieder erneut eine Vereinfachung der Datenübertragung verbunden und ebenso ist es möglich die Menge der pro Zeiteinheit übertragenen Daten zu erhöhen bzw. die Übertragungszeit zu verringern.

Gemäß Anspruch 2 empfängt das jeweils sendende Datenübertragungsmodul die ausgesendeten Daten auch wieder selbst, wodurch auf einfache Weise überprüft werden kann ob die ausgesandten Daten richtig übertragen worden sind.

Gemäß Anspruch 5 wird die aus der FR-A-2 535 133 bekannte Datenübertragungsvorrichtung dahingehend weitergebildet, daß eine Speichervorrichtung vorgesehen ist, in der grundsätzliche alle übertragenen Daten eingespeichert werden und zwar unabhängig davon, ob die empfangenen Daten tatsächlich in dem jeweiligen Datenübertragungsmodul benötigt werden oder nicht. Auf diese Weise erübrigen sich Test- und Bestimmungsvorrichtungen die prüfen, ob die empfangenen Daten in dem jeweiligen Modul benötigt werden oder nicht. Die Sendeberechtigung eines jeden einzelnen Datenübertragungsmoduls wird durch die jeweilige Steuereinheit des Datenübertragungsmoduls kontinuierlich neu berechnet. Dies geschieht dadurch, daß das jeweils sendende Datenübertragungsmodul eine charakteristische kennung austrahlt, durch die die Sendereihenfolge und/oder das sendende Datenübertragungsmodul gekennzeichnet wird. Durch Vergleich dieser charakteristischen kennung mit der jeweils eigenen Kennung wird der Beginn der Sendeperiode durch die jeweiligen Steuereinheiten bei jedem Sende- bzw. Empfangsvorgang neu festgelegt. Auf diese Weise erfolgt eine wiederholte Synchronisation der an die gemeinsame Übertragungsstrecke angeschlossenen Datenübertragungsmodule. Selbst wenn ein Datenübertragungsmodul ausfällt ist damit die einwandfreie Funktion der anderen Datenübertragungsmodule in keiner Weise beeinträchtigt.

Die Unteransprüche haben vorteilhafte Weiterbildungen und Ausgestaltungen der Erfindung zum Inhalt.

Weitere Einzelheiten, Merkmale und Vorteile der Erfindung ergeben sich aus der nachfolgenden Beschreibung von Ausführungsformen der Erfindung anhand der Zeichnung.

Es zeigt

Fig. 1 ein Prinzipschaltbild des Datenübertragungssystems gemäß der vorliegenden Erfindung,

Fig. 2 ein Blockschaltbild einer Ausführungsform eines Datenübertragungsmoduls,

Fig. 3 eine Darstellung des verwendeten Datenübertragungsprotokolls,

Fig. 4 eine beispielhafte Zuordnung der Biteingänge des Datenübertragungsmoduls 5 zu verschiedenen Bitausgängen.

Fig. 5 eine erweiterte Datenübertragungsvorrichtung mit einer Mehrzahl an ein Datenübertragungsmodul angeschlossenen E/A-Modulen,

Fig. 6 ein Blockschaltbild eines E/A-Moduls,

Fig. 7 eine erweiterte Datenübertragungsvorrichtung mit einer mehreren über Verbindungsmodule miteinander verbunden Übertragungsstrecken, und

Fig. 8 ein Blockschaltbild eines Verbindungsmoduls.

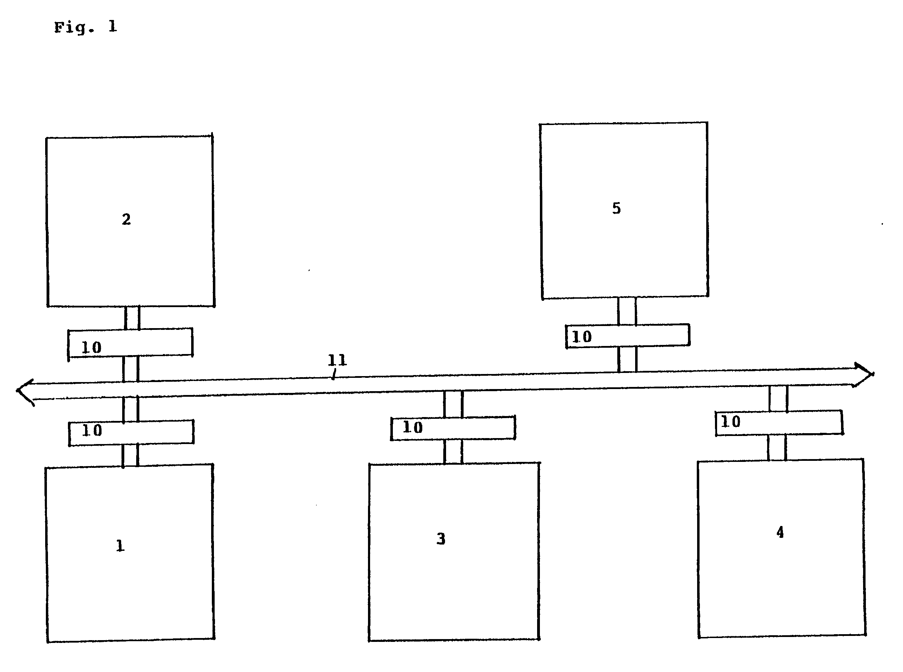

Fig. 1 zeigt das Prinzipschaltbild einer erfindungsgemäßen Datenübertragungsvorrichtung bei der beispielsweise fünf Datenübertragungsmodule 1 bis 5 über zugeordnete Schnittstellenvorrichtungen 10 an eine gemeinsame Übertagungsstrecke 11 angeschlossen sind. Zwischen den einzelnen Datenübertragungsmodulen 1 bis 5 lassen sich in beliebiger Richtung eine Vielzahl von Daten übertragen und es handelt sich somit um eine bidirektionales Datenübertragungsvorrichtung.

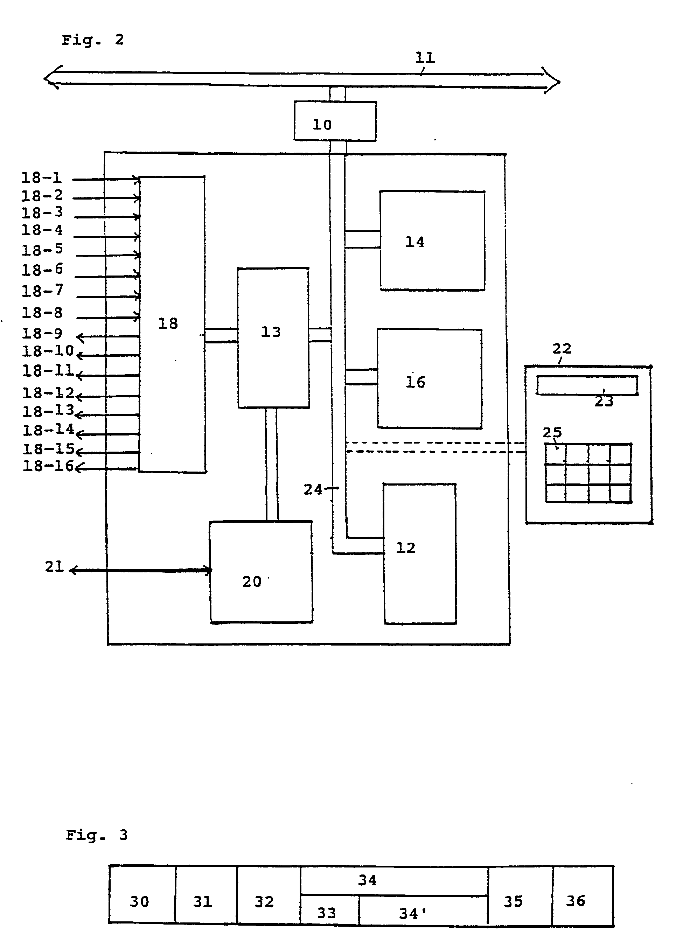

Anhand von Fig. 2 wird nun der konkrete Aufbau einer Ausführungsform der Datenübertragungsmodule 1 bis 5 aus Fig. 1 beschrieben. Die Datenübertragungsmodule weisen jeweils eine erste Steuereinheit 12, eine zweite Steuereinheit 13, eine erste Speichervorrichtung 14, eine zweite Speichervorrichtung 16, ein parallele E/A-Vorrichtung 18 und eine serielle E/A-Vorrichtung 20 auf. Diese Bauteile sind über einen Modulbus 24 untereinander und auch mit der jeweiligen Schnittstellenvorrichung 10 der Datenübertragungsmodule verbunden. Die erste Speichervorrichtung 14 weist für jedes der an die Übertragunsstrecke 11 ansgeschlossenen Datenübertragungsmodule 1 bis 5 einen entsprechenden Speicherbereich auf. Die parallele E/A-Vorrichtung 18 weist acht Biteingägen 18-1 bis 18-8 auf, an denen die zu übertragenden Daten anliegen, und acht Bitausgänge 18-9 bis 18-16 auf, über die die übertragenen Daten ausgegeben werden. Über die serielle E/A-Vorrichtung 20, bei der es sich vorzugsweise um eine RS485 Datenschnittstelle handelt, können über den Datenanschluß 21 seriell Daten ein- bzw. ausgegeben werden. Die Datenein- bzw. Datenausgabe wird durch die zweite Steuereinheit 13 gesteuert, während Übertragung und Empfang der Daten auf und von der gemeinsamen Übertragungsstrecke 11 durch die erste Steuereinheit 12 gesteuert wird. Bei den Steuereinheiten handelt es sich vorzugsweise um 1-Chip-Mikrocomputer.

An die Datenübertragungsmodule 1 bis 5 läßt sich eine Programmiervorrichtung 22 anschließen, die über den Modulbus 2a mit den Bauteilen der Datenübertragunsmodule verbunden ist, was in Fig. 2 durch die strichlierte Linie angedeutet ist. Die Programmiervorrichtung 22 weist eine Anzeige 23 und ein Bedienungstastenfeld 25 auf. Die Programmiervorrichtung 22 kann bei entsprechender Ausgestaltung alternativ auch an die E/A-Vorrichtungen 18 und 20 oder unmittelbar an die gemeinsame Übertragungsstrecke 11 angeschlossen werden.

Nachfolgend wird die Übertragung von Daten zwischen den einzelnen Modulen beschrieben, die unter Steuerung der Steuereinheiten 12 in den einzelnen Datenübertragungsmodulen aufgrund eines Programmes durchgeführt wird. Die einzelnen Datenübertragungsmodule 1 bis 5 sind durch eine Moduladresse A als charakteristische Kennung gekennzeichnet. Die Datenübertragung zwischen einzelnen Modulen erfolgt gemäß einem Zeitmultiplexverfahren, bei der die einzelnen Steuereinheiten 12 in den einzelnen Datenübertragungsmodulen 1 bis 5 diese gemäß der Sendereihenfolge für eine vorbeistimmte Sendeperiode auf Senden schalten, wobei der jeweils sendende Datenübertragunsmodul auf Empfang bleibt und seine eigene Datensendung auch selbst wieder empfägt. Die erste Steuereinheit 12 des jeweils sendenden Datenübertragungsmoduls 1 bis 5 vergleicht die empfangene Datensendung mit den abgeschickten Daten, wodurch auf einfache Weise eine Prüfung der übertragenen Daten realisiert ist.

Wenn ein Datenübertragungsmodul sendet, werden alle an den Biteingängen 18-1 bis 18-8 anliegenden bzw. durch die zweite Steuereinheit 13 eingelesenen Eingangsdaten unter Steuerung der zweiten Steuereinheit 12 in den entsprechenden Speicherbereich der ersten Speichervorrichtung 14 eingespeichert. Dann werden diese Eingangsdaten durch die erste Steuereinheit 12 entsprechend dem verwendeten Übertragungsprotokoll aufbereitet und gelangen über die jeweilige Schnittstellenvorrichtung 10 und die gemeinsame Übertragungsstrecke 11 zu den anderen auf Empfang geschalteten Datenübertragungsmodulen 1 bis 4. Hier werden diese Daten ebenfalls unter der Steuerung der jeweiligen Steuereinheit 12 in den dem sendenden Datenübertragungsmodul zugeordneten Speicherbereich der jeweiligen ersten Speichervorrichtung 14 abgespeichert. Die Zuordnung der übertragenen Daten zu den jeweiligen Bitausgängen 18-9 bis 18-16 in den einzelnen Datenübertragungsmodulen wird später beschrieben.

Die Daten werden vorzugsweise mittels eines HDLC-Protokolls übertragen, dessen prinzipielle Datenstruktur in Fig. 3 dargestellt ist. Dabei umfaßt ein einzelner Datenblock als erstes zu übertragendes Byte ein Startbyte 30 gefolgt von einem Andreßbyte 31, einem Steuerbyte 32, einem Datenfeld 34 mit beispielweise 32 Byte Länge, einem Blockprüffeld 35 bestehend aus 2 Byte und einem Endebyte 36. Das Starbyte 30, das Endebyte 36, und das Blockprüffeld 35 entsprechen in ihren Funktionen den entsprechenden Feldern bzw. Bytes bei herkömmlichen HDLC-Protokollen. Das Adreßbyte enthält die Adresse $A_s$ bzw. die charackteristische Kennung des sendenden Datenübertragungsmoduls. Das Steuerbyte 32 kennzeichnet einen bestimmten Übertragungsmodus, so daß bei der beschriebenen Ausführungsform 256 verschiedene Übertragungsmodimöglich sind. In dem Datenfeld 34 werden die aus den jeweiligen Dateneingangsregistern 18 übernommenen Daten übertragen.

Für den Fall, daß mittels der Programmiervorrichtung 22 eine Zuordnung zwischen Bitein- und Bitausgängen neu programmiert werden soll, wird das erste Byte des Datenfeldes 34 als Zieladressbyte 33 verwendet und darin die Adresse des Datenübertragungsmoduls übertragen, dessen Bitausgänge 18-9 bis 18-16 neu zugeordnet werden.

In der beispielhaften Ausführungsform gemäß Fig. 1 entspricht die Durchnummerierung der einzelnen Datenübertragungsmodule von 1 bis 5 gleichzeitig der Sendereihenfolge. Damit ist es auf besonders einfache Weise möglich den Beginn der Sendeperiode eines Datenübertragungsmoduls unabhängig voneinander in den einzelnen Steuereinheiten 12 zu berechnen. Hierzu wird durch die jeweilige Steuereinheit 12 folgende Adressdifferenz berechnet

$$D = A_s - A_e$$

wobei $A_s$ die Adresse des momentan sendenden Datenübertragungsmoduls, und $A_e$ die Adresse des jeweils empfangenden Datenübertragungsmoduls ist. Jeweilige Steuereinheit 12 aktiviert jedesmal bei Empfang von Daten einen Zeitgeber mit einer Laufzeit, die proportional zur positiven Adressdifferenz D ist. Ergibt die Adressdifferenzbildung einen negativen Wert, wird zu dem negativen Wert die Gesamtzahl der an die gemeinsame Übertragungsstrecke angeschlossenen Datenmodule hinzuaddiert um den Wert zu erhalten, der zur Voreinstellung des Zeitgebers verwendet wird. Der Zeitgeber kann sowohl mittels eines entsprechenden Bausteins oder auch durch entsprechende Programmierung der Steuereinheiten 12 realisiert werden.

Da diese Berechnung des Beginns der Sendeperiode bei jedem Sende- bzw. Empfangsvorgang neu durchgeführt wird, erfolgt kontinuierlich eine Synchronisation aller an die gemeinsame Übertragungsstrecke 11 angeschlossenen Datenübertragungsmodule 1 bis 5. Außerdem ist auf diese Weise gewährleistet, daß ein ausgefallener Datenübertragungsmodul die Funktion der Datenübertragungsvorrichtung in keiner Weise beeinträchtigt. Es fällt lediglich einmal die Synchronisation des Beginns der Sendeperiode aus. Falls ein Datenübertragungsmodul ausfällt, kann aufgrund der Adressdifferenz D auch festgestellt werden, welches Datenübertragungsmodul ausgefallen ist und in der ersten Speichervorrichtung 14 wird eine entsprechende Ausfallinformation abgespeichert. Gleichzeitig wird ein entsprechendes Alarmsignal, beispielsweise durch Aufleuchten einer nicht näher dargestellten Warnleuchte ausgegeben. Mittels der Programmiervorrichtung 22 läßt sich dann von jedem beliebigen Datenübertragungsmodul ausder jeweiligen Speichervorrichtung 14 auslesen, welcher Datenübertragungsmodul ausgefallen ist.

Nachfolgend wird die Zuordnung der übertragenen Daten zu den einzelnen Bitausgängen 18-9 bis 18-16 und damit die Zuordnung zwischen den Biteingängen und den Bitausgängen der Datenübertragungsmodule 1 bis 5 erläutert. Diese Zuordnung ist in einem entsprechenden Speicherbereich der zweiten Speichervorrichtung 16 abgespeichert. An die Biteingänge 18-1 bis 18-9 können die Schaltkontakte zur Betätigung von elektrischen Verbrauchern, beispielweise Lampen, Türöffnern etc., oder auch die digitalisierten Stellsignale von elektronischen Regelvorruchtungen anliegen. Über die seriellen E/A-Vorrichtungen 20 lassen sich beispielweise Kleinrechner miteinander verbinden. Die Zuordnung der einzelnen seriellen E/A-Vorrichtungen 20 bzw. Datenanschlüsse 21 wird ebenfalls in den Speichervorrichtungen 16 abgespeichert.

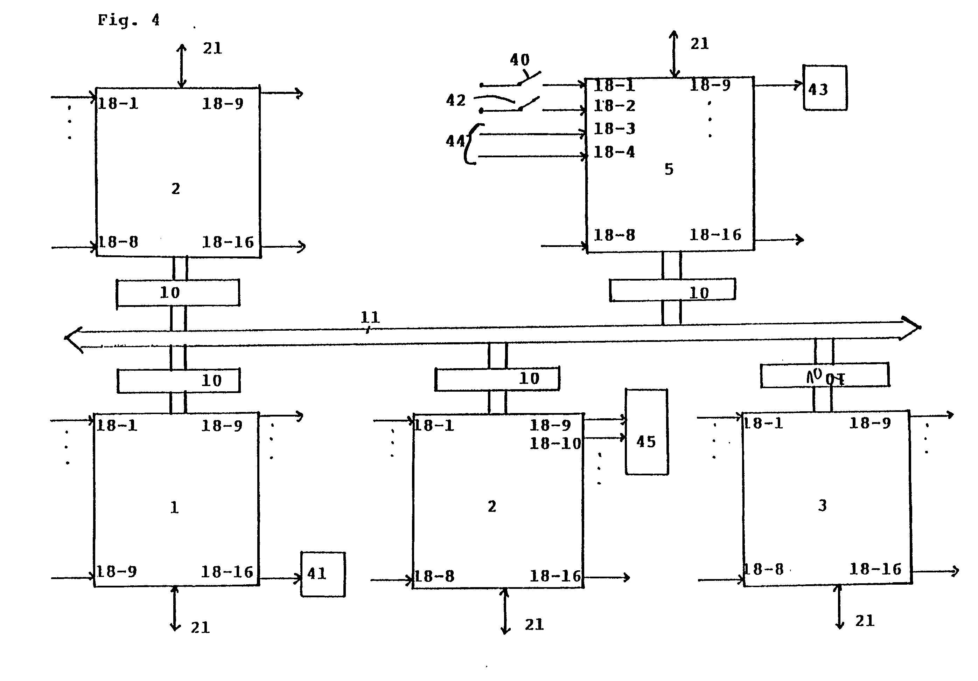

In Fig. 4 ist beispielhaft die Zuordnung der Biteingänge 18-1 bis 18-4 des Datenübertragungsmoduls 5 zu den jeweiligen Bitausgängen in den zugeordneten Datenübertragungsmodulen veranschaulicht. Den Biteingängen 18-1 bis 18-4 des Datenübertragungsmoduls 5 werden der Reihe nach ein Schaltkontakt 40 einer

4

Lampe 41, ein Schaltkontakt 42 eines Türöffners 43 und die Steuersignale 44 eines in drei Stufen schaltbaren Ventilators 45 zugeführt. Damit ergibt sich folgende Zuordnung zwischen Bitein- und Bitausgängen:

| elektr. Verbraucher | Dateneingang Modul/Biteingang | Datenausgang Modul/Bitausgang |
|---|---|---|
| Lampe | 5/18-1 | 1/18-16 |
| Türöffner | 5/18-2 | 5/18-9 |
| Ventilator | 5/18-3 | 3/18-9 |
| - " - | 5/18-4 | 3/18-10 |

Für den Fall, daß bei der erfindungsgemäßen Datenübertragungsvorrichtung zur Betätigung von elektrischen Verbrauchern, beispielsweise Lampen, Ventilatoren, etc. diese in einem Gebäude verteilt angeordnet sind, besteht ein besonderer Vorteil der Erfindung darin, daß die Funktionsfähigkeit der betätigten elektrischen Verbraucher mit einem geringen Zusatzaufwand überprüft werden kann. Hierzu wird lediglich von jedem elektrischen Verbraucher der durch ein Datenübertragungsmodul betätigt wird, ein entsprechendes "In-Betrieb"-Signal auf einen Eingang des jeweiligen Datenübertragungsmoduls zurückgeführt.

Um die in den einzelnen Datenübertragungsmodulen gespeicherten Daten auch bei einem Stromausfall zu erhalten, ist bei einer bevorzugten Ausgestaltung der Erfindung in den einzelnen Modulen eine Batteriepufferung vorgesehen. Stehen Specherbausteine ausreichender Kapazität zu Verfügung kann in den Datenübertragungsmodulen 1 bis 5 auch jeweils eine einzige Speichervorrichtung verwendet werden.

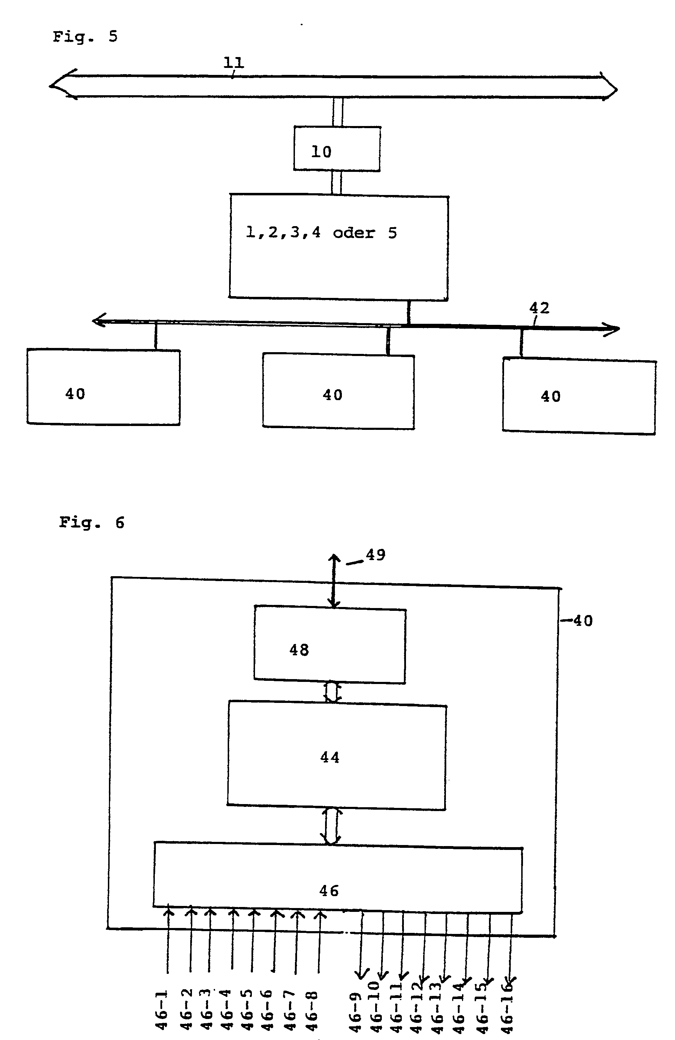

Fig. 5 stellt das Blockschaltbild einer Erweiterungsmöglichkeit der Datenübertragungsvorrichtung gemäß der vorliegenden Erfindung dar. An ein Datenübertragungsmodul 1 - 5 gemäß Fig. 2 sind über einen Datenbus 42 eine Mehrzahl von E/A-Modulen 40 angeschlossen. Der prinzipielle Aufbau eines solchen E/A-Moduls 40 ist aus Fig. 6 ersichtlich. Ein E/A-Modul 40 weist eine E/A-Steuereinheit 44 auf, die sowohl mit einer parallelen E/A-Vorrichtung 46 als auch mit einer seriellen E/A-Vorrichtung 48 verbunden ist. Die Komponenten 44, 46 und 48 der E/A-Module 40 entsprechen den Komponenten 13, 18 und 20 in den Datenübertragungsmodulen 1 - 5 und für die genannten Komponenten lassen sich die identischen Schaltungsbausteine verwenden. Die serielle E/A-Vorrichtung 48 ist mit einem Datenanschluß 49 versehen; durch den die E/A-Module 40 an den Datenbus 42 angeschlossen sind. Die parallele E/A-Vorrichtung 46 weist ebenso wie die Datenübertragungsmodule 1 bis 5 acht parallele Biteingänge 46-1 bis 46-8 und acht parallele Bitausgänge 46-9 bis 46-16 auf. Falls nur Bitein- oder nur Bitausgänge an den E/A-Modulen 40 oder direkt an den Datenübertragungsmodulen 1 bis 5 benötigt werden, lassen sich die parallelen E/A-Vorrichtungen 46 bzw. 18 so ausgestalten, daß sie nur Bitein- bzw. nur Bitausgänge aufweisen.

Durch Anschluß einer unterschiedlichen Zahl von E/A-Modulen 40 an jeweils ein Datenübertragungsmodul 1 - 5 läßt sich die Zahl der benötigten Schalteingänge 18-1 bis 18-8 bzw. Schaltausgänge 18-9 bzw. 18-16 auf besonders einfache Weise an die Gegebenheiten und Bedürfnisse des jeweiligen Anwendungsfalls anpassen. Die Zahl der an ein einzelnes Datenübertragungsmodul 1 - 5 anschließbaren E/A-Module 40 ist lediglich durch die Verarbeitungskapazität der E/A-Steuereinheiten 50 bzw. 13 beschränkt. In der beschriebenen Ausführungsform können beispielsweise an jedes Datenübertragungsmodul 1-5 weitere E/A-Module angeschlossen werden, so daß insgesamt 256 Bitein- bzw. Bitausgänge 18-1 bis 18-16 zur Verfügung stehen.

Eine bevorzugte Anwendung der erfindungsgemäßen Datenübertragungsvorrichtung besteht darin, daß sich auf einfache Weise zentrale Schalt- und Überwachungseinrichtungen realisieren lassen. Bei größeren Gebäuden, beispielweise Bürokomplexen, Schulen oder Behörden, werden häufig in einer zentralen Überwachungs- und Steuerstelle eine Vielzahl von Überwachungs- und Steuerleitungen zusammengeführt. Da die zu schaltenden elektrischen Verbraucher häufig mit sehr unterschiedlichen Spannungen und Strömen arbeiten sind in solchen zentralen Stellen eine Vielzahl von unterschiedlichen Leitungen zusammengeführt, je nach dem ob ein Motor oder eine Lampe geschaltet werden soll, oder ob lediglich die Leitung für eine Kontrollampe vorgesehen ist. Dies führt zu einem vergleichsweise komplizierten und unübersichtlichen Aufbau solcher Steuerstellen, wobei gegenseitige Beeinflussungen aufgrund der unterschiedlichen Ströme und Spannungen nicht ausgeschlossen werden können. Werden solche zentralen Überwachungs- und Steuerstellen mit dem Datenübertragungsvorrichtung gemäß der vorliegenden Erfindung realisiert, so sind in der Zentrale lediglich ein oder mehrere Datenübertragungsmodule 1 - 5 an die gemeinsame Übertragungsstrecke 11 angeschlossen, an die wiederum jeweils eine Vielzahl von E/A-Modulen 40 angeschlossen ist, durch die die verschiedenen Überwachungen und Steuerungen durchgeführt werden können.

Eine weitere besonders vorteilhafte Anwendungsmöglichkeit der vorliegenden Erfindung besteht darin, daß bei der Planung größerer Gebäudekomplexe die Schaltung oder Verdrahtung der Vielzahl der elektrischen Verbraucher sich erheblich vereinfacht. Bei der Durchführung der Installation der einzelnen elektrischen Verbraucher muß in keinem Fall bekannt sein an welche Stelle in einem Raum eine Überwachungsvorrichtung oder ein Schalter für einen elektrischen Verbraucher angebracht werden soll. Der elektrische Verbraucher wird lediglich an der gewünschten Stelle an das Netz angeschlossen und der zugehörige Schalter wird unmitelbar über einen Datenübertragungsmodul 1 - 5 und eventuell über ein E/A-Modul 40 mit der gemeinsamen Übertragungsstrecke in Form einer Zweidrahtleitung verbunden. Von welcher Stelle dann ein bestimmter elektrischer Verbraucher geschaltet werden soll, kann später bestimmt bzw. auch später geändert werden und es muß lediglich dafür Sorge getragen werden, daß eine genügende Zahl von Anschlußmöglichkeiten an die gemeinsame Busleitung 11 vorgesehen sind. Selbst wenn jedoch keine Anschlußmöglichkeit vorgesehen ist kann eine solche zu einem späteren Zeitpunkt ohne Schwierigkeiten installiert werden.

Die tatsächliche Zuordnung der einzelnen Bitein- und Bitausgänge 18-1 bis 18-16 und damit beispielsweise der Schalter und Überwachungseinrichtungen zu verschiedenen elektrischen Verbrauchern läßt sich beispielsweise auf einem Computersystem simulieren und solange verbessern und verändern bis es den gewünschten Einsatzbedingungen optimal entspricht. Diese optimierte Zuordnung läßt sich dann beispielsweise über die Programmiervorrichtung 22 in Datenübertragungsmodule 1 - 5 einspeichern, wodurch auf einfache Weise die Verdrahtung einer Vielzahl von elektrischen Verbrauchern realisiert wird.

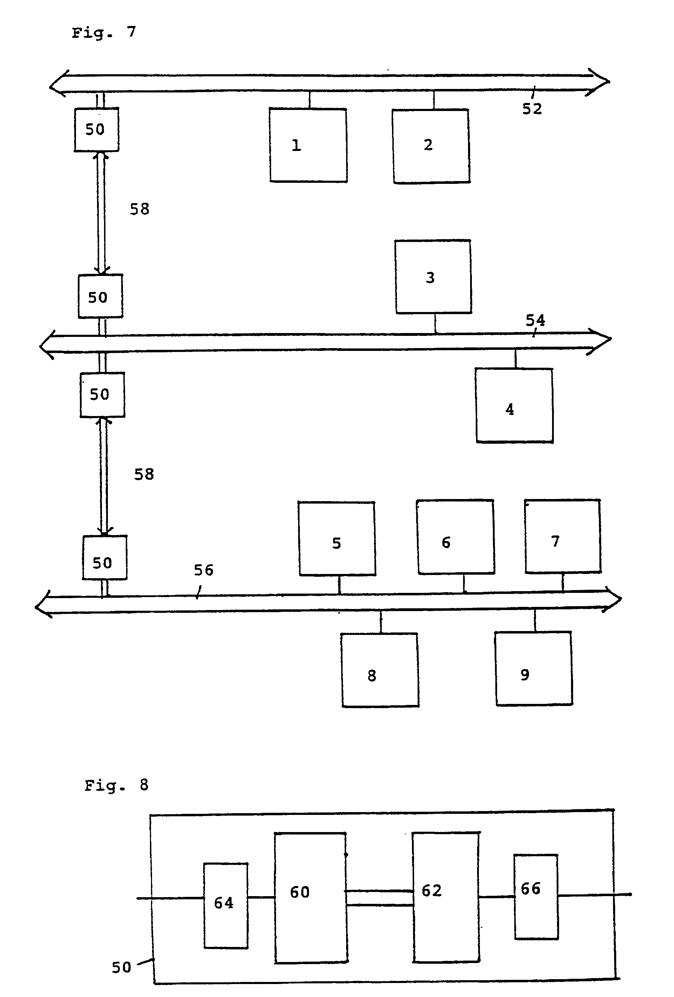

Fig. 7 stellt dar, wie sich das erfindungsgemäße Datenünertragungssystem auf einfache Weise modulartig erweitern läßt. Über an den Endpunkten von Verbindungsstrecken 58 angeordnete Verbindungsmodule 50 lassen sich eine Vielzahl von gemeinsamen Übertragungsstrecken 52, 54 und 56 miteinander verbinden. An die einzelnen gemeinsamen Übertragungsstrecken 52, 54 und 56 lassen sich in bekannter Weise Datenübertragungsmodule 1 bis 9, gemäß Fig. 2, und an diese wiederum mehrere E/A-Module 40, gemäß Fig. 6, anschließen. Der Datenfluß läuft dann von einem E/A-Modul 40 bzw. einem Datenübertragungsmodul 1 bis 9 über die jeweilige Übertragungsstrecke 52, 54 bzw. 56, den Übertragungsstrecken zugeordneten Verbindungsmodulen 50 zu allen an das Gesamtsystem angeschlossenen Datenübertragungsmodulen 1 bis 9. Um die eindeutige Zuordnung der verschiedenen Schaltein- und Schaltausgängebzw. der seriellen E/A-Vorrichtungen zu gewährleisten muß lediglich die charakteristische Kennung bzw. die Moduladresse der Datenübertragungsmodule 1 bis 9 um die Adresse der jeweiligen Übertragungsstrecke 52, 54 oder 56 erweitert werden.

Fig. 8 zeigt ein Blockschaltbild einer beispielhaften Ausgestaltung der Verbindungsmodule 50. Die Verbindungsmodule 50 bestehen im wesentlichen aus zwei Steuereinheiten 60 und 62 mit jeweils zugeordneten Schnittstellenvorrichtungen 64 bzw. 66. Die Schnittstellenvorrichtung 64 nimmt die Signale von dem Verbindungsstrecke 58 auf bzw. gibt sie an diesen ab, während die Schnittstellenvorrichtung 66 Signale von den jeweiligen Übertragungsstrecken 52, 54 oder 56 aufnimmt bzw. daran abgibt. Für wie Steuereinheiten 60 und 62 kann der gleiche Baustein wie für die erste Steuereinheit 12 in den einzelnen Datenübertragungsmodulen verwendet werden. Die zu übertragenden Daten werden über die Verbindungsstrecken 58 in der gleichen Form übertragen, wie sie über die Übertragungsstrecken 52, 54 oder 56 übertragen werden.

Durch die modulartige Erweiterung der erfindungsgemäßen Datenübertragungsvorrichtung, wie sie in Fig. 7 dargestellt ist, lassen sich beispielsweise auf übersichtliche Art und Weise die verschiedenen Stockwerke in einem größeren Gebäude oder auch verschiedene Gebäude eines größeren Industriekomplexes miteinander verbinden. Es ist damit auf einfache Art und Weise möglich sämtliche elektrische Verbraucher beispielsweise eines Bürohochhauses von einer zentralen Stelle aus zu steuern und zu überwachen.

## Patentansprüche

1. Datenübertragungsverfahren zwischen einer Mehrzahl von an eine gemeinsame übertragungsstrecke angeschlossenen Datenübertragungsmodulen, die abwechselnd eine vorbestimmte Sendeperiode lang entsprechend einer varbestimmten Sendereihenfolge Daten aussenden, wobei die Steuerung des Datenaustausches durch die einzelnen Datenübertragungsmodule selbst durchgeführt wird, und wobei das jeweils sendende Datenübertragungsmodul (1 bis 9) neben zu übertragenden Daten eine die Sendereihenfolge charakterisierende Kennung ($A_s$) in Form einer Moduladresse aussendet, dadurch gekennzeichnet,
daß alle die von dem jeweils sendenden Datenübertragungsmodul (1 bis 9) ausgesandten Daten in allen an die gemeinsame Datenübertragungsstrecke (11; 52, 54, 56) angeschlossenen Datenübertragungsmodulen (1 bis 9) empfangen und abgespeichert werden,
daß die die Sendereihenfolge charakterisierende Kennung (A ) dis Moduladresse und/oder ausschließlich die Sendereihenfolge charakterisiert, und
daß durch Vergleichen der charakteristischen Kennung ($A_s$) des jeweils sendenden Datenübertragungs-

modul mit der charakteristischen Kennung (A$_e$) des jeweils empfangenden Datenübertragungsmoduls und/oder der Sendereihenfolge der Beginn der Sendeperiode bei jedem Sendevorgang neu festgelegt wird.

2. Datenübertragungsverfahren nach Anspruch 1, dadurch gekennzeichnet, daß das jeweils sendende Datenübertragungsmodul (1 bis 9) die selbst ausgesandten Daten wieder empfängt.

3. Datenübertragungsverfahren nach einem der vorhergehenden Ansprüche, dadurch gekennzeichnet, daß die charakteristische Kennung eine Moduladresse (A) ist, deren nummerischer Wert die Sendereihenfolge festlegt.

4. Datenübertragungsverfahren nach einem der vorhergehenden Ansprüche, dadurch gekennzeichnet, daß der Beginn der Sendeperiode jedes einzelnen Datenübertragungsmoduls (1 bis 9) durch Bilden einer Adressdifferenz (D) zwischen der Moduladresse (A$_e$) des jeweils empfangenden Datenübertragungsmoduls und der Moduladresse (A$_s$) des sendenden Datenübertragungsmoduls festegelt wird.

5. Datenübertragungsvorrichtung zur Übertragung von Daten gemäß einem Verfahren nach einem der Ansprüche 1 bis 4 mit
einer Mehrzahl von Datenübertragungsmodulen, die jeweils über Schnittstellenvorrichtungen an eine gemeinsame Übertragungsstrecke angeschlossen sind,
wobei jedes der Datenübertragungsmodule wenigstens eine Steuereinheit aufweist und die jeweilige Steuereinheit die Datenübertragungsmodule wiederholt nacheinander für eine vorbestimmte Sendeperiode auf Sendebetrieb schaltet, und
wobei das jeweils sendende Datenübertragungsmodul (1 bis bis 9) in der Sendeperiode neben zu übertragenden Daten wenigstens eine die Sendereihenfolge charakterisierende Kennung (A$_s$) in Form einer Moduladresse aussendet, gekennzeichnet durch
eine erste Speichereinrichtung (14), die jeweils in den einzelnen Datenübertragungsmodulen (1 bis 9) enthalten ist und in die alle von den jeweils sendenden Datenübertragungsmodulen übertragenen Daten einspeicherbar sind und dadurch,
daß die durch das jeweils sendende Datenübertragungsmodul (1 bis bis 9) ausgesandte charakteristische Kennung (A$_s$) die Moduladresse und/oder ausschließlich die Sendereihenfolge charakterisiert, und
daß durch die einzelnen Steuereinheiten (12) kontinuierlich der Beginn der Sendeperiode durch Vergleich der charakteristischen Kennung (A$_s$) des jeweils sendenden Datenübertragungsmoduls mit der charakteristischen Kennung (A) des jeweils eigenen Datenübertragungsmoduls und/oder der Sendereihenfolge festlegbar ist.

6. Datenübertragungsvorrichtung nach Anspruch 5, dadurch gekennzeichnet, daß die jeweils sendenden Datenübertragungsmodule (1 - 9) während des Sendens auf Empfang geschaltet bleiben.

7. Datenübertragungsvorrichtung nach einem der Ansprüche 5 oder 6, dadurch gekennzeichnet, daß die einzelnen Datenübertragungsmodule (1 bis 9) jeweils eine parallele E/A-Vorrichtung (18) mit einer Mehrzahl von Bitausgängen (18-1 bis 18-8) und/oder Biteingängen (18-9 bis 18-16) aufweisen.

8. Datenübergungsvorrichtung nach einem der Ansprüche 5 bis 7, dadruch gekennzeichnet, daß die einzelnen Datenübertragungsmodule (1 - 9) jeweils eine serielle E/A-Vorrichtung (20) aufweisen.

9. Datenübertragungsvorrichtung nach einem der Ansprüche 5 bis 8, dadurch gekennzeichnet, daß inden einzelnen Datenübertragungsmodulen (1 bis 9) zur Steuerung der E/A-Vorgänge eine zweite Steuereinheit (16) vorgesehen ist.

10. Datenübertragungsvorrichtung nach einem der Ansprüche 5 bis 10, dadurch gekennzeichnet, daß die Datenübertragungsmodule (1 bis 9) eine zweite Speichervorrichtung (16) aufweisen, in der die Zuordnung der in der ersten Speichervorrichtung speicherbaren Daten zu den Bitausgängen (18-1 bis 18-8) der seriellen E/A--Vorrichtung (18) gespeichert ist.

11. Datenübertragungsvorrichtung nach einem der Ansprüche 5 bis 10, dadurch gekennzeichnet, daß an die einzelnen Datenübertragungsmodule (1 bis 9) und/ oder die gemeinsame Datenübertragungsstrecke (11) eine Programmiervorrichtung (22) anschließar ist, mittels der die in der zweiten Speichervorrichtung (16) gespeicherte Zuordnung änderbar ist.

12. Datenübertragungsvorrichtung nach einem der Ansprüche 5 bis 11, dadurch gekennzeichnet, daß bei der Datenübertragung zwischen den einzelnen Datenübertragungsmodulen (1 bis 9) Steuerdaten (32) übertragen werden, die in einem entsprechenden Speicherbereich der ersten Speichervorrichtung (14) speicherbar sind.

13. Datenübergungsvorrichtung nach einem der Ansprüche 5 bis 12, dadurch gekennzeichnet, daß die Datenübertragung zwischen den einzelnen Datenübertragungsmodulen mittels eines HDLC-Protokolls mit einem Startbyte (30), einem Adressbyte (31), einem Steuerbyte (32), mehreren Datenbytes (33,34), mehreren Blockprüfbytes (35) und einem Endbyte (36) durchgeführt wird.

14. Datenübertragungsvorrichtung nach einem der Ansprüche 5 bis 13, dadurch gekennzeichnet, daß die charakteristische Kennung der Datenübertragungsmodule (1 bis 9) eine Moduladresse (A) ist, deren nummerischer Wert die Sendereihenfolge desjeweiligen Datenübertragungsmoduls bestimmt.

15. Datenübertragungsvorrichtung nach Anspruch 14, dadurch gekennzeichnet, daß die Steuereinheiten (12) den Beginn der Sendeperiode des zugehörigen Datenübertragungsmoduls durch Differenzbildung zwischen der Moduladresse (A$_s$) des sendenden Datenübertragungsmoduls und der Moduladresse (A$_e$) des eigenen Datenübertragungsmoduls festlegen.

16. Datenübertragungsvorrichtung nach einem der Ansprüche 5 bis 16, dadurch gekennzeichnet, daß die Steuereinheiten (12) ein Alarmsignal absetzen, wenn eines der Datenübertragungsmodule in der jeweiligen vorgesehenen Sendeperiode nicht sendet.

17. Datenübertragungsystem nach einem der Ansprüche 5 bis 16, dadurch gekennzeichnet, daß die Übertragungsstrecke eine Busleitung (11) ist.

18. Datenünertragungsvorrichtung nach Anspruch 17, dadurch gekennzeichnet, daß die Busleitung eine Zweidrahtleitung ist.

19. Datenübertragungsvorrichtung nach einem der Ansprüche 5 bis 18, dadurch gekennzeichnet, daß ein Verbindungsmodul (50) vorgesehen ist, durch den mehrere gemeinsame Übertragungsstrecken (52, 54, 56) miteinander verbindbar sind.

20. Datenübertragungsvorrichtung nach einem der Ansprüche 5 bis 19, dadurch gekennzeichnet, daß an die einzelnen Datenübertragungsmodule (1 - 9) eine Mehrzahl von E/A-Modulen (40) anschließbar sind, die jeweils eine Mehrzahl von Bitein- und/oderBitausgängen (18-1 bis 18-16) und/oder serielle E/A-Vorrichtungen (20) aufweisen.

21. Datenübertragungsvorrichtung nach einem der Ansprüche 5 bis 20, gekennzeichnet durch die Verwendung als Schalt- und Überwachungseinrichtung für elektrische Verbraucher.

## Claims

1. Method of data transmission between a multiple of data transmission modules connected to a common transmission cable which send out data in turn for a prescribed sending cycle in accordance with a prescribed sending sequence, in which the control of the data exchange is undertaken by the individual data transmission modules themselves, and in which the data transmission module currently sending (1 to 9) besides sending data to be transmitted sends out an identification code (A$_s$) characterising the sending sequence in the form of a module address, characteristic features of which are

that all the data sent out by the transmission module (1 to 9) currently sending are received and stored in all data transmission modules (1 to 9) connected to the common data transmission cable (11: 52, 54, 56),

that the identification code (A$_s$) characterising the sending sequence characterises the module address and/or solely the sending sequence, and

that by comparing the characterising identification code (A$_s$) of the data transmission module currently sending with the characterising identification code (A$_e$) of the data transmission module currently receiving and/or of the sending sequence the start of the sending cycle is reestablished for each sending process.

2. Method of data transmission in accordance with claim 1 characterised by the data transmission module (1 to 9) currently sending receiving back the data it has itself sent out.

3. Method of data transmission in accordance with one of the previous claims, characterised by the characterising identification code being a module address (A), the numerical value of which establishes the sending sequence.

4. Method of data transmission in accordance with one of the previous claims, characterised by the start of the sending cycle of each individual data transmission module (1 to 9) being established by creating an address difference (D) between the module address (A$_e$) of the data transmission module currently receiving and the module address (A$_s$) of the data transmission module currently sending.

5. Data transmission device for transmitting data by a method in accordance with one of the claims 1 to 4 with

a multiple of data transmission modules, which are respectively connected via interface devices to a common transmission cable,

in which each of the data transmission modules has at least one control unit and the respective control unit switches to sending mode the data transmission modules recalled in succession for a prescribed sending cycle, and

in which the data transmission module (1 to 9) currently sending sends out in the sending cycle, besides data to be transmitted, at least one identification code (A$_s$) characterising the sending sequence in the form of a module address, characteristic features of which are

a first memory device (14) which is incorporated in the respective individual data transmission modules (1 to 9) and in which all data transmitted by the data transmission modules currently sending data can be stored and thereby,

that the characterising identification code (A$_s$) sent out by the data transmission module (1 to 9) currently sending characterises the module address and/or solely the sending sequence, and

that the start of the sending cycle can be continuously established by the individual control units (12) by comparing the the characterising identification code (A$_s$) of the data transmission module currently sending with the characterising identification code (A$_s$) of its own data transmission module and/or the sending sequence.

6. Data transmission device in accordance with claim 5, characterised by the data transmission modules (1 to 9) currently sending remaining switched to receiveing mode during sending.

7. Data transmission device in accordance with one of the claims 5 or 6, characterised by the individual data transmission modules (1 to 9) each having a parallel in/out device (18) with a multiple of bit outputs (18-1 to 18-8) and/or bit inputs (18-9 to 18-16).

8. Data transmission device in accordance with one of the claims 5 to 7, characterised by the individual data transmission modules (1 - 9) each having a series in/out device (20).

9. Data transmission device in accordance with one of the claims 5 to 8, characterised by a second control unit (16) being provided in the individual data transmission modules (1 to 9) for controlling the in/out processes.

10. Data transmission device in accordance with one of claims 5 to 9, characterised by the data transmission modules (1 to 9) having a second memory device (16) in which is stored the allocation of the data that can be stored in the first memory device to the bit outputs (18-1 to 18-8) of the series in/out device (18).

11. Data transmission device in accordance with one of the claims 5 to 10, characterised by it being possible to connect a programming device (22) to the individual data transmission modules (1 to 9) and/or the common data transmission cable (11), by means of which the allocation stored in the second memory device (16) can be changed.

12. Data transmission device in accordance with one of the claims 5 to 11, characterised by control data (32) being transmitted during data transfer between the individual data transmission modules (1 to 9) which can be stored in a corresponding memory section of the first memory device (14).

13. Data transmission device in accordance with one of the claims 5 to 12, characterised by data transfer between the individual data transmission modules being performed by means of an HDLC protocol with a start byte (30), an address byte (31), a control byte (32) several data bytes (33, 34), several block test bytes (35) and an end byte (36).

14. Data transmission device in accordance with one of the claims 5 to 13, characterised by the characterising identification code of the data transmission modules (1 to 9) being a module address (A), the numerical value of which determines the sending sequence of the respective data transmission module.

15. Data transmission device in accordance with claim 14, characterised by the control units (12) establishing the start of the sending cycle of the respective data transmission module by difference creation between the module address (A$_s$) of the sending data transmission module and the module address (A$_e$) of its own data transmission module.

16. Data transmission device in accordance with one of the claims 5 to 15, characterised by the control units (12) setting off an alarm signal if one of the data transmission modules does not send in the respective prescribed sending cycle.

17. Data transmission system in accordance with one of the claims 5 to 16, characterised by the transmission cable being a bus-line (11).

18. Data transmission device in accordance with claim 17, characterised by the bus-line being a two-wire cable.

19. Data transmission device in accordance with one of the claims 5 to 18, characterised by a connector module (50) being provided by which a number of common transmission cables (52, 54, 56) can be connected together.

20. Data transmission device in accordance with one of the claims 5 to 19, characterised by the possibility of connecting a multiple of in/out modules (40) to the individual data transmission modules (1 - 9), each of which has a multiple of bit inputs and/or outputs (18-1 to 18-16) and/or series in/out devices (20).

21. Data transmission device in accordance with one of the claims 5 to 20, characterised by its use as a switching and monitoring device for electricity consuming devices.

## Revendications

1. Procédé de transmission de données, entre une pluralité de modules de transmission de données, raccordés sur une ligne de transmission commune, qui envoient des données alternativement, pendant une période d'émission de longueur prédéterminée, la commande de l'échange de données étant effectuée par les différents modules de transmission de données mêmes, et le module de transmission de données (1 à 9) chaque fois en train d'émettre envoyant, outre les données à transmettre, une identification (A$_s$) caractérisant l'ordre de succession des émetteurs, sous la forme d'une adresse de module, caractérisé en ce que:

toutes les données, envoyées par chacun des modules de transmission de données (1 à 9) en train d'émettre, sont reçues et mises en mémoire, dans tous les modules de transmission de données (1 à 9) raccordés à la ligne de transmission de données commune (11;52,54,56)

l'identification (A$_s$) qui caractérise l'ordre de succession des émetteurs caractérisé l'adresse du module et/ou exclusivement l'ordre de succession des émetteurs, et

par comparaison de l'identification (A$_s$) caractéristique de chaque module de transmission en train d'émettre avec l'identification (A$_e$) caractéristique de chaque module de transmission de données en train de recevoir et/ou de l'ordre de succession des émetteurs, on fixe de nouveau le début de la période d'émission pour chaque processus d'émission.

2. Procédé de transmission de données selon la revendication 1, caractérisé en ce que module de transmission de données (1 à 9) qui est en train d'émettre reçoit de nouveau les données qu'il a lui même émises.

3. Procédé de transmission de données selon l'une des revendications précédentes, caractérisé en ce que l'identification caractéristique est une adresse de module (A), dont la valeur numérique détermine l'ordre de succession des émetteurs.

4. Procédé de transmission de données selon l'une des revendications précédentes, caractérisé en ce que le début de la période d'émission de chaque module de transmission de données (1 à 9) est susceptible d'être déterminé par formation d'une différence d'adresse (D), entre l'adresse de module (A$_e$) du module de transmission des données en train de recevoir et l'adresse de module (A$_s$) du module de transmission des données en train d'émettre.

5. Dispositif de transmission de données pour transmettre des données, suivant un procédé selon l'une des revendications 1 à 4, avec:

une pluralité de modules de transmission de données, chacun raccordés par des dispositifs d'interface à une ligne de transmission commune,

chacun des modules de transmission de données présentant au moins une unité de commande et l'unité de commande respective commutant en fonctionnement d'émission les modules de transmission de données, de façon répétitive, les uns après les autres, pendant une période d'émission prédéterminée, et

le module de transmission de données (1 à 9) chaque fois en train d'émettre envoyant, outre les données à transmettre, au moins une identification (A$_s$) caractérisant l'ordre de succession des émetteurs, sous la forme d'une adresse de module, caractérisé par:

un premier dispositif de mémoire (14), contenu chaque fois dans les différents modules de transmission de données (1 à 9) et dans lequel toutes les données transmises par les modules de transmission de données en train d'émettre sont susceptible d'être mises en mémoire et, de ce fait,

l'identification (A$_s$) caractéristique, émise par le module de transmission de données (1 à 9) en train d'émettre caractérisant l'adresse de module et/ou exclusivement l'ordre de succession des émetteurs, et

le début de la période d'émission étant susceptible d'être déterminé, de façon continue, grâce aux différentes unités de commande (12), par comparaison de l'identification (A$_e$) caractéristique du module de transmission de données en train d'émettre avec l'identification (A$_s$) caractéristique du module de transmission de données propre et/ou de l'ordre de succession.

6. Dispositif de transmission de données selon la revendication 5, caractérisé en ce que les modules de transmission de données (1 à 9) chaque fois en train d'émettre restent commutés en réception pendant l'émission.

7. Dispositif de transmission de données selon l'une des revendications 5 ou 6, caractérisé en ce que les différents modules de transmission de données (1 à 9) présentent chaque fois un dispositif entrée/sortie parallèle (18), avec une pluralité de sorties de bit (18-1 à 18-8) et/ou d'entrées de bit (18-9 à 18-16).

8. Dispositif de transmission de données selon l'une des revendications 5 à 7, caractérisé en ce que les différents modules de transmission de données (1 à 9) présentent chaque fois un dispositif entrée/sortie série (20).

9. Dispositif de transmission de données selon l'une des revendications 5 à 8, caractérisé en ce qu'une deuxième unité de commande (16) est prévue dans les différents modules de transmission de données (1 à 9), en vue de commander les processeurs entrée/sortie.

10. Dispositif de transmission de données selon l'une des revendications 5 à 9, caractérisé en ce que les modules de transmission de données (1 à 9) présentent un deuxième dispositif de mémoire (16), dans lequel est effectuée l'association des données susceptibles d'être mises en mémoire dans le premier dispositif de mémoire avec les sorties de bit (18-1 à 18-8) du dispositif d'entrée/sortie série (18).

11. Dispositif de transmission de données selon l'une des revendications 5 à 10, caractérisé en ce qu'un dispositif de programmation (22), au moyen duquel on peut modifier l'association mise en mémoire dans le deuxième dispositif de mémoire (16), est succeptible d'être raccordé aux différents modules de transmission de données (1 à 9) et/ou à la ligne de transmission des données (11) commune.

12. Dispositif de transmission de données selon l'une des revendications 5 à 11, caractérisé en ce que, lors de la transmission de données entre les différents modules de transmission de données (1 à 9), il est transmis des données de commande (32) qui sont susceptibles d'être mises en mémoire dans une plage de mémoire correspondante du premier dispositif de mémoire (14).

13. Dispositif de transmission de données selon l'une des revendications 5 à 12, caractérisé en ce que la transmission de données entre les différents modules de transmission de données (1 à 9) est effectuée au moyen d'un protocole HDLC (high level data link control), avec un byte de départ (30), un byte d'adresse (31), un byte de commande (32), plusieurs bytes de données (33,34), plusieurs bytes de contrôle de bloc (35) et un byte de fin (36).

14. Dispositif de transmission de données selon l'une des revendications 5 à 13, caractérisé en ce que l'identification caractéristique des modules de transmission de données (1 à 9) est une adresse de module (A), dont la valeur numérique détermine l'ordre de succession de chaque module de transmission de données.

15. Dispositif de transmission de données selon la revendication 14, caractérisé en ce que les unités de commande (12) déterminant le début de la période d'émission de module de transmission de données concerné par formation de différence, entre l'adresse de module ($A_s$) du module de transmission de données en train d'émettre et de l'adresse de module ($A_e$) du module de transmission de données propre.

16. Dispositif de transmission de données selon l'une des revendications 5 à 15, caractérisé en ce que les unités de commande (12) envoient un signal d'alarme, si l'un des modules de transmission de données n'émet pas dans la période d'émission respective prévue.

17. Dispositif de transmission de données selon l'une des revendications 5 à 16, caractérisé en ce que le ligne de transmission de données est une ligne de bus (11).

18. Dispositif de transmission de données selon la revendications 17, caractérisé en ce que la ligne de bus est une ligne à deux conducteurs.

19. Dispositif de transmission de données selon l'une des revendications 5 à 18, caractérisé en ce qu'il est prévu un module de liaison (50), grâce auquel plusieurs lignes de transmission (52,54,56) communes peuvent être reliées ensemble.

20. Dispositif de transmission de données selon l'une des revendications 5 à 19, caractérisé en ce qu'aux modules de transmission de données (1 à 9) peuvent être raccordés une pluralité de modules entrée/sortie (40), qui présentent chaque fois une pluralité d'entrées de bit et/ou de sorties de bit (18-1 à 18-16) et/ou de dispositifs entrée/sortie série (20).

21. Dispositif de transmission de données selon l'une des revendications 5 à 20, caractérisé par l'utilisation comme dispositif de commutation et de surveillance pour des consommateurs électriques.

Fig. 1

Fig. 2

Fig. 3

Fig. 4

EP 0 301 017 B1

Fig. 5

Fig. 6

15

Fig. 7

Fig. 8

16